# EUROPÄISCHE PATENTSCHRIFT

(11) **EP 0 461 572 B1**
(45) Veröffentlichungstag und Bekanntmachung des Hinweises auf die Patenterteilung: **02.01.1997**
(21) Anmeldenummer: 91109437.3
(22) Anmeldetag: 08.06.1991
(51) Int. Cl.: H04M 1/72, H04Q 7/32, H04B 1/40

(54) **Multifunktionales, in verschiedene Betriebsarten umsteuerbares Funkgerät**
Multifunctional radio apparatus switching between different operation modes
Appareil radio multifonctionnel et commutable en différents modes d'opération

(30) Priorität: 13.06.1990 DE 4019009
(43) Veröffentlichungstag der Anmeldung: 18.12.1991
(73) Patentinhaber: GRUNDIG E.M.V. Elektro-Mechanische Versuchsanstalt Max Grundig GmbH & Co. KG, D-90762 Fürth (DE)
(72) Erfinder: Bauerschmidt, Werner Grundig E.M.V., Kurgartenstrasse 37 W-8510 Fuerth (DE); Ritter, Kai-Uwe, Grundig E.M.V., Kurgartenstrasse 37 W-8510 Fuerth (DE)

(56) Entgegenhaltungen:
- EP-A- 0 035 590
- EP-A- 0 248 351
- DE-B- 2 854 516
- GB-A- 2 181 624
- US-A- 4 481 382
- US-A- 4 747 122
- US-A- 4 875 229

## Beschreibung

Die Erfindung betrifft ein multifunktionales Funkgerät gemäß dem Oberbegriff des Patentanspruchs 1.

Um den Bewegungsbereich des Benutzer noch mehr zu erweitern, werden in verschiedenen Ländern zunehmend sogenannte schnurlose Telefonapparate (cordless telephone) eingesetzt. Die Informationsübertragung zwischen einer Basisstation und der zugehörigen Mobilstation des schnurlosen Telefonapparates erfolgt über ein Funkübertragungskanalpaar. Die Basisstation wird mittels einer Verbindungsdose an das Fernmeldenetz angeschlossen, so daß für den Benutzer beispielsweise der Zugang zum öffentlichen Fernsprechnetz möglich ist.

Dadurch, daß die Basisstation und die Mobilstation über einen Funkübertragungskanal miteinander in Verbindung stehen, ist der Bewegungsbereich des Benutzers auf einen Umkreis bis zu 200 m zum jeweiligen Anschluß (Verbindungsdose) erweitert.

Bei der Basisstation löst ein von der zugehörigen Steuereinrichtung erkannter ankommender Ruf auf der Amtsleitung die Funkkanalsuche aus. Durch Betätigen der Gabelumschalt-Taste wird in der Mobilstation die Funkkanalsuche eingeleitet. In der EP-B1-0 074 940 ist der dabei vorgenommene Kennungsaustausch näher beschrieben und erläutert. Ein als frei erkannter Funkübertragungskanal wird belegt, der Sender aktiviert und die Kennung als Datentelegramm über den Funkübertragungskanal gesendet. Nach dem Senden jeder Kennung wird auf ein Quittungstelegramm (Kennung) der entsprechenden Gegenstation gewartet. Wird die Kennung (Quittungstelegramm) der Gegenstation empfangen, so wird diese von einer in den jeweiligen Stationen angeordneten Einrichtung mit der eigenen Kennung verglichen. Bei Übereinstimmung wird von der mit der Einrichtung verbundenen Steuereinrichtung die Verbindung durchgeschaltet, die Kennungsausgabe eingestellt und die bestehende Funkverbindung überwacht.

Eine weitere Anwendung für schnurlose Telefonapparate ist bei öffentlichen Telepoint-Diensten gegeben. Beim Telepoint-Dienst sind die Basisstationen an öffentlichen Stellen, wie etwa an großen Plätzen, Bahnhöfen, Flughäfen, Einkaufszentren, Autobahnraststätten, usw. installiert. Der Besitzer eines geeigneten Handapparates (Mobilteil) kann im Umkreis von einigen 100 Metern einer solchen Basisstation an das öffentliche Fernsprechnetz gelangen, um Gespräche zu führen.

Eine solche Telepoint-Basisstation benötigt den Zugriff zu einer Datenbank, um die Berechtigung der Telepoint-Benutzer zu überprüfen, um die anfallenden Gesprächsgebühren zu verrechnen usw.. Dieser Zugriff erfolgt üblicherweise ebenfalls über das öffentliche Fernsprechnetz.

Anders als etwa bei einem Autotelefonsystem sollen beim Telepoint-Dienst ausschließlich das bestehende, meist analoge Fernsprechnetz und die Mobilteile der schnurlosen Telefonappparate weiter benutzt werden. Damit erhofft man sich Gesprächsgebühren, die nur unwesentlich über denjenigen eines normalen Telefons liegen. Aus diesem Grund erlauben die Telepoint-Konzepte lediglich abgehende Gespräche; anrufen kann man den Besitzer des Mobilteils beim Telepoint-Dienst nicht.

Um die Erreichbarkeit im häuslichen Bereich oder im Büro zu verbessern, wurde der europäische Funkrufdienst eingeführt, bei dem ein Funkrufempfänger über maximal vier Rufnummern erreichbar ist. In der Funkrufzentrale werden Codesignale gebildet, die dem mit der Funkrufzentrale verbundenen UKW-Sender zur Rufaussendung zugeführt werden. Die ausgesendeten Codesignale werden vom Funkrufempfänger empfangen und decodiert. Bei Übereinstimmung zwischen dem im Decoder eingestellten Code mit dem empfangenen Code werden ein akustisches und ein optisches Signal erzeugt. Die Bedeutung der Codesignale muß zwischen dem Funkrufteilnehmer und dem anrufenden Teilnehmer abgesprochen sein.

Weiterhin ist ein als City-Ruf bezeichneter Funkrufdienst bekannt. Beim City-Ruf werden kurze Informationen als Ziffern oder Texte auf der Anzeigeeinrichtung (Display) des Funkrufempfängers dargestellt. Die Informationsübermittlung ist beim City-Ruf in drei Rufklassen möglich: Nur-Ton für Ton-Funkrufempfänger, die entsprechend wie beim europäischen Funkrufdienst vier verabredete Signale empfangen können; Numeric für Numeric-Funkrufempfänger zum Empfang von bis zu fünfzehn Ziffern oder Sonderzeichen und Alphanumeric für Alphanumeric-Funkrufempfänger zum Empfangen von Text (Ziffern- und Buchstabenfolgen) bis zu achtzig Zeichen.

Der City-Rufdienst wird in regionalen Zonen (sog. Rufzonen) ausgestrahlt, wobei das Versorgungsgebiet in etwa den gesamten Einzugsbereich einer großen Stadt abdeckt.

Der City-Ruf kann von den Teilnehmern auch grenzüberschreitend genutzt werden, beispielsweise kann der Funkrufdienst Alphapage in Frankreich, Teledrine in Italien sowie Europage in Großbritannien genutzt werden. Hierzu muß sich der City-Ruf-Teilnehmer in eine internationale europäische Rufzone einbuchen. Für die Verwendung in Funkrufsystemen wurde ein europäischer Standard gemäß "CCIR Radio Paging Code No. 1" (Pocsag-Code gemäß British Post Office Code Standardistation Advisory Group) vereinbart. Die Struktur des Poscag-Codes (beispielsweise in der EP-B1-0 118 153 beschrieben) und der Aufbau der Codewörter (Adreß- und Nachrichten- Codewörter) sind an die Eigenschaften des Funkübertragungskanals angepaßt.

Schließlich ist aus der DE-C-38 39 015 ein schnurloses Telefon bekannt, bei dem das Mobilteil des schnurlosen Telefons zusätzlich die Funktion eines Funkrufempfängers übernimmt. Hierzu wird die im Mobilteil vorhandene Schaltung aus Mikroprozessorschaltung, Bedienungs- und Anzeigeelementen mitbenutzt, um die vom Mobilteil empfangene Nachricht zu formatieren und anzuzeigen. Eine Anregung wie die Kombination aus Mobilteil und Funkrufempfänger realisiert werden kann, ist dem Gegenstand der DE-C-38 39 015 nicht zu entnehmen.

Neben den oben beschriebenen Ausgestaltungen von Mobilfunksystemen sind auch Nachrichtenübertragungssysteme bekannt, bei denen ankommende Anrufe (bei einem personell nicht besetzten Teilnehmeranschluß) durch einen automatisch arbeitenden Anrufbeantworter (private Zusatzeinrichtung) entgegengenommen werden. Zur Durchführung dieses Vorgangs muß lediglich eine Schalteinrichtung betätigt werden, die eine Umschaltung der Hautpanschlußleitung vom Fernsprechapparat auf den automatischen Anrufbeantworter bzw. Auskunftgeber vornimmt.

In der nicht vorveröffentlichten EP-A-0 405 394 der Anmelderin ist eine Teilnehmereinrichtung vorgeschlagen worden, wobei der anrufende Teilnehmer numerische, alphanumerische und/oder gesprochene Nachrichten hinterlassen kann. Diese Nachrichten werden im Zwischenspeicher der Teilnehmereinrichtung zwischengespeichert. Nach dem Auslösen der Verbindung werden diese automatisch zu einem Funkrufempfänger mit optischer und/oder akustischer Ausgabeeinrichtung übermittelt. Der rufende Teilnehmer kann auch dann eine Nachricht zu einem Funkrufempfänger übermittelt, wenn er nicht die Funkrufteilnehmernummer kennt. Ist die Teilnehmereinrichtung in Form eines Anrufbeantworters mit Nachrichtenaufzeichnung ausgestaltet, so ist es für den anrufenden Teilnehmer nicht erforderlich (im Hinblick auf eine rasche Übermittlung seiner Nachricht) den Besitzer des Anrufbeantworters, welcher unterwegs ist, über den Funkrufdienst zu erreichen. Da der anrufende Teilnehmer seine Nachricht hinterlassen kann, fallen somit keine sonst erforderlichen zweimaligen Gebühren an, sondern die zweite Gesprächsgebühr geht zu Lasten des Besitzers des Anrufbeantworters.

Durch die in der Patentanmeldung EP-A-0 405 394 vorgeschlagene Zusatzfunktion der Teilnehmereinrichtung, insbesondere des Anrufbeantworters, erübrigt sich ein Anruf des Besitzers des Anrufbeantworters von Unterwegs aus. Weiterhin enthält somit die sonst erforderliche Gesprächsgebühr für die ferngesteuerte Abfrage einer vom Anrufbeantworter aufgezeichneten Nachricht des Anrufers. Je nach Ausstattung des Funkrufempfängers kann auf dem Display des Funkrufempfängers die zwischengespeicherte kurze Information als Ziffer und/oder Text dargestellt werden. Weist der Funkrufempfänger auch eine akustische Ausgabeeinrichtung auf, so können auch Sprachdurchsagen übermittelt werden. Da moderne Anrufbeantworter in der Regel MFV-fähig (Mehrfrequenzwahlverfahren) sind und Einrichtung zur Rufweiterleitung über den europäischen Funkrufdienst aufweisen, ist als zusätzlicher Geräteaufwand lediglich der zusätzliche Zwischenspeicher erforderlich.

Durch automatisch arbeitende Teilnehmereinrichtungen, z.B. Anrufbeantworter, und Funkrufempfänger kann die Erreichbarkeit eines gerufenen, aber abwesenden Teilnehmers verbessert werden. Bedingt durch die Konzeption der Funkrufdienste ist zwar eine schnelle Nachrichtenübermittlung zur Funkzentrale möglich, jedoch es ist nicht sichergestellt, daß die empfangene Nachricht auch zuverlässig von der Funkzentrale gesendet wird.

Weiterhin ist aus der US-A-4,875,229 ein Funkgerät bekannt, welches als (mobilfunkfähiges) Mobilteil dient und in dem ein Anrufbeantworter integriert ist.

Schließlich ist aus der US-A-4,481,382 ein programmierbares Telefonsystem bekannt. Bei dem daraus bekannten Kombinationsgerät aus Gerät der Telekommunikationsgerät und Gerät der Unterhaltungselektronik ist beim Überschreiten des Funkversorgungsgebiets die automatische Umschaltung des Kombinationsgeräts auf eine sogenannte Beeper-Funktion vorgesehen.

Der Erfindung liegt die Aufgabe zugrunde, ein multifunktionales Funkgerät derart auszugestalten, daß die bei drahtgebundenen Teilnehmereinrichtungen bekannten Leistungsmerkmale auch im Funkgerät zur Verfügung gestellt werden.

Diese Aufgabe wird bei einem gattungsgemäßen Funkgerät durch die kennzeichnenden Merkmale des Patentanspruchs 1 gelöst.

Das erfindungsgemäße Funkgerät weist den Vorteil auf, daß nicht nur die Nutzung des Funkgeräts für den Teilnehmer attraktiver gestaltet ist, sondern auch die Verkehrsgüte des Nachrichtenübertragungssystems erhöht wird. Untersuchungen beim Autotelefonsystem haben ergeben, daß nur jeder dritte Verbindungsaufbau zum Autotelefon erfolgreich ist. Beim erfindungsgemäßen Funkgerät kann der rufende Teilnehmer auf jeden Fall seine Nachricht hinterlassen, auch wenn der Besitzer des Funkgeräts unterwegs ist. Moderne Teilnehmereinrichtungen, insbesondere schnurlose Telefonapparate oder Funkgeräte, z.B. Autotelefon, weisen in der Regel eine Wählhilfe, insbesondere eine automatische Wähleinrichtung, auf. Wird der hierfür erforderliche Zwischenspeicher mitbenutzt, um die über den Rufdienst kommenden Daten, insbesondere Rufnummem, zu speichern, so wird dem Benutzer auf überraschend einfache Art und Weise ein hoher Bedienkomfort geboten. Der Benutzer kann dabei in beim schnurlosen Telefonapparat gewohnter Weise unter Mitbenutzung der Wählhilfe die Verbindung zu einem anrufenden Teilnehmer herstellen. In der automatischen Betriebsweise (vergleichbar mit dem Leistungsmerkmal "Ruhe vor dem Telefon") wird automatisch ein Rückruf zur Basistation des schnurlosen Telefonapparats oder der Telepoint-Basisstation eingeleitet und die vom anrufenden Teilnehmer kommende Nachricht im Anrufbeantworter aufgezeichnet.

Die Ausführungsform des Funkgeräts nach Patentanspruch 2 weist den Vorteil auf, daß der Benutzer auch ohne spezielle Kenntnisse die vom Funkgerät bereitgestellen Möglichkeiten für seine Aufgaben und Anwendungen nutzbar machen kann. Die für die verschiedenen Funktionen erforderliche Eingabebefehle werden dem Benutzer automatisch im Dialogverfahren angeboten, d.h. von der Steuereinrichtung erzeugt und an der Anzeigeeinrichtung dargestellt. Weiterhin ist von Vorteil, daß trotz der Funktionsvielfalt die Akzeptanz des Benutzers gegeben ist und Informationen schnell erhalten und/oder weitergereicht, ausgewertet und umgesetzt werden.

Übernimmt gemäß der Ausführungsform nach Patentanspruch 3 die Steuereinrichtung die Funktion einer Sendersuchlaufeinrichtung, so ist ein stromsparender Betrieb des Funkgeräts möglich.

Die Ausführungsform des Funkgeräts gemäß Patentanspruch 4 weist den Vorteil auf, daß der für den digitalen Anrufbeantworter erforderliche Raumbedarf gering ist. Weiterhin ist von Vorteil, daß eine Nutzung des Anrufbeantworters als Diktiergerät ermöglicht wird, ohne daß zur Nachrichtenaufzeichnung ein Funkübertragungskanal belegt werden muß, wie dies beispielsweise beim aus der DE-A-33 23 858 bekannten schnurlosen Fernsprechgerät erforderlich ist.

Die Erfindung wird im folgenden anhand einer in der Zeichnung dargestellten Ausführungsform näher beschrieben und erläutert.

Es zeigt:
- Fig. 1: eine Ausführungsform der Benutzeroberfläche in Ansicht und
- Fig. 2: das Blockschaltbild der in Fig. 1 dargestellten Ausführungsform.

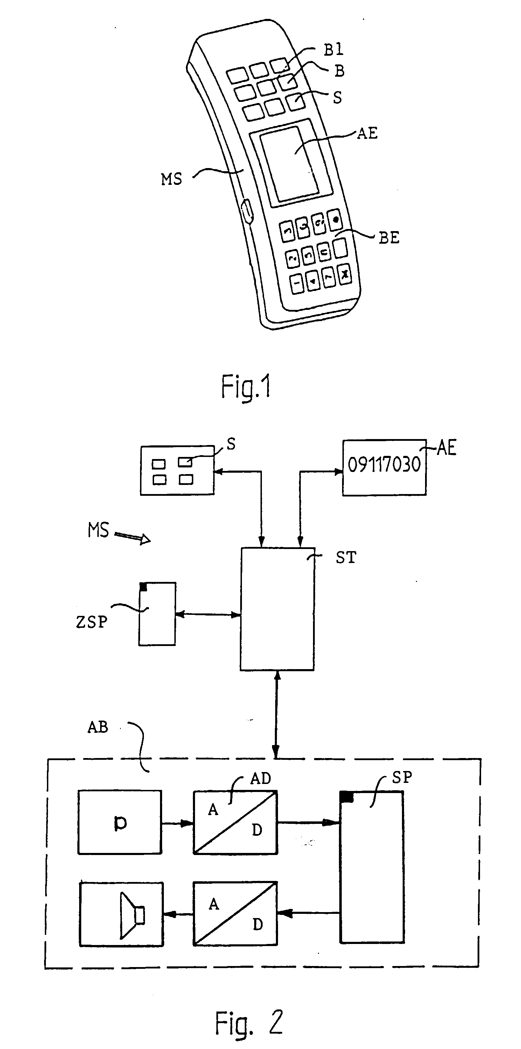

Bei der in Fig. 1 dargestellten Ausführungsform der Benutzeroberfläche ist die Tastatur geteilt und beispielsweise die für die Steuerung des telepointfähigen Mobilteils und/oder Mobilteils eines schnurlosen Telefonapparats erforderlichen Bedienungselemente BE unterhalb einer Anzeigeeinrichtung AE angeordnet ist. Die Bedienungselemente B bzw. B1 zur Steuerung einer Anzeigeeinrichtung AE (für die Darstellung von über den Funkrufdienst empfangenen Daten) bzw. Steuerung der Funktion eines Anrufbeantworters AB (siehe Fig. 2) und ein Betriebsartenschalter S sind oberhalb der Anzeigeeinrichtung AE des Mobilteils MS angeordnet.

Bei der nachfolgenden Erläuterung des erfindungsgemäßen Funkgerätes wird von der Anwendung bei einem schnurlosen Telefonapparat kombiniert mit einem Funkrufempfänger ausgegangen. Der Einsatz auch in anderen Nachrichtennetzen für vermittelte Verbindungen, beispielsweise bei einem Autotelefonsystem, ist ebenfalls möglich.

Fig. 2 zeigt das Blockschaltbild des Mobilteils MS mit integriertem Funkrufempfänger und Anrufbeantworter AB.

Im Mobilteil MS ist nur eine einzige Steuereinrichtung ST angeordnet, welche neben den verschiedenen Gerätefunktionen und Betriebsarten des Mobilteils und/oder Funkrufempfängers auch die des Anrufbeantworters AB sowie den Austausch vermittlungstechnischer Informationen zwischen dem Mobilteil MS und dem Nachrichtennetz für vermittelte Verbindungen steuert.

Das Mobilteil MS weist einen mit der Steuereinrichtung ST verbundenen Betriebsartenschalter S auf. Die Steuereinrichtung ST ist mit der Anzeigeeinrichtung AE verbunden, wodurch u.a. im Dialogverfahren eine Bedienerführung des Benutzers ermöglicht wird.

Weiterhin übernimmt die Steuereinrichtung ST im Ruhezustand die Funktion einer Sendersuchlaufeinrichtung und tastet abwechselnd alle oder einige Funkübertragungskanäle des schnurlosen Telefonapparats und des Funkrufsystems auf das Vorliegen eines Verbindungswunsches ab.

Die über das Funkrufsystem zum Funkrufempfänger übermittelten Nachrichten werden einem mit der Steuereinrichtung ST verbundenen Zwischenspeicher ZSP zugeführt. Schließlich kann die Steuereinrichtung ST auch die Funktion eines Wählautomatens übernehmen und steuert anhand der im Zwischenspeicher ZSP gespeicherten Wählinformation den Verbindungsaufbau zum rufenden Teilnehmer.

Der Anrufbeantworter AB enthält zur Nachrichtenaufzeichnung einen Analog-Digital-Umsetzer AD und einen mit diesem verbundenen Speicher SP.

Die vom empfangsbereiten Mobilteil MS empfangenen Nachrichten, beispielsweise über das Funkrufsystem übermittelte Nachrichten, werden im Speicher SP zwischengespeichert, decodiert (Steuereinrichtung ST) und an der Anzeigeeinrichtung AE angezeigt. Der Speicher SP oder der Zwischenspeicher ZSP ist beispielsweise ein batteriegestützes RAM, ein NOV-RAM (Nonvolatile Random Acces Memory) oder ein EEPROM (Electrically Erasable Programmable Read Only Memory).

## Patentansprüche

1. Multifunktionales Funkgerät, welches als telepointfähiges Mobilteil oder als Mobilteil eines schnurlosen Telefonapparats oder als Funkrufempfänger betrieben werden kann, wobei im Mobilteil (MS) der Funkrufempfänger und ein Anrufbeantworter (AB) integriert sind und wobei im Funkgerät eine einzige Steuereinrichtung (ST) angeordnet ist, welche neben den verschiedenen Gerätefunktionen und Betriebsarten des Mobilteils (MS) und Funkrufempfängers auch die des Anrufbeantworters (AB) sowie den Austausch vermittlungstechnischer Informationen zwischen dem Mobilteil (MS) und dem Nachrichtennetz für vermittelte Verbindungen steuert, **dadurch gekennzeichnet**, daß über das Funkrufsystem zum Funkrufempfänger übermittelte Nachrichten einem mit der Steuereinrichtung (ST) verbundenen Zwischenspeicher (ZSP) zugeführt werden, daß die Steuereinrichtung (ST) auch die Funktion eines Wählautomatens übernehmen kann und daß die Steuereinrichtung (ST) anhand der im Zwischenspeicher (ZSP) gespeicherten Wählinformation den Verbindungsaufbau zum rufenden Teilnehmer steuert.

2. Funkgerät nach Anspruch 1, **dadurch gekennzeichnet**, daß das Mobilteil (MS) einen mit der Steuereinrichtung (ST) verbundenen Betriebsartenschalter (S) aufweist und daß die Steuereinrichtung (ST) mit einer Anzeigeeinrichtung (AE) verbunden ist, wodurch im Dialogverfahren eine Bedienerführung des Benutzers ermöglicht wird.

3. Funkgerät nach Anspruch 1 oder 2,
**dadurch gekennzeichnet**, daß die Steuereinrichtung (ST) im Ruhezustand die Funktion einer Sendersuchlaufeinrichtung übernimmt und abwechselnd alle oder einige Funkübertragungskanäle des schnurlosen Telefonapparats und des Funkrufsystems auf das Vorliegen eines Verbindungswunsches abtastet.

4. Funkgerät nach Anspruch 1, **dadurch gekennzeichnet**, daß der Anrufbeantworter (AB) zur Nachrichtenaufzeichnung einen Analog-Digital-Umsetzer (AD) und einen mit diesem verbundenen Speicher (SP) enthält.

## Claims

1. Multifunctional radio set which can be operated as a telepoint-capable mobile unit or as a mobile unit of a cordless telephone or as a radio-paging receiver, wherein the radio-paging receiver and an answering machine (AB) are integrated within the mobile unit (MS) and wherein a single control device (ST) is arranged in the radio set which besides the various equipment functions and operating modes of the mobile unit (MS) and of the radio-paging receiver also controls those of the answering machine (AB) and the exchange of switching-oriented information between the mobile unit (MS) and the message network for switched connections,
**characterised in that** messages transmitted over the radio-paging system to the radio-paging receiver are supplied to an intermediate memory (ZSP) connected to the control device (ST), in that the control device (ST) can also take over the function of an automatic dialler and in that the control device (ST) controls the set-up of the connection to the calling subscriber on the basis of the dialling information stored in the intermediate memory (ZSP).

2. Radio set according to Claim 1, **characterised in that** the mobile unit (MS) comprises an operating-mode switch (S) which is connected to the control device (ST) and in that the control device (ST) is connected to a display device (AE), as a result of which prompting of the user in an interactive process is made possible.

3. Radio set according to Claim 1 or 2, **characterised in that** the control device (ST) in the idle state takes over the function of a scan-tuning device and intermittently scans all or some radio-transmission channels of the cordless telephone and of the radio-paging system for the presence of a connection request.

4. Radio set according to Claim 1, **characterised in that** with a view to message-recording the answering machine (AB) contains an analogue-digital converter (AD) and a memory (SP) which is connected to the latter.

## Revendications

1. Appareil radio multifonctionnel, qui peut fonctionner en tant que partie mobile permettant une transmission par bornes de raccordement d'un téléphone sans fil ou en tant que récepteur radio, dans lequel le récepteur radio et un répondeur téléphonique (AB) sont intégrés dans la partie mobile (MS) et dans lequel à l'intérieur de l'appareil radio est disposé un dispositif de commande (ST), qui, en dehors des différentes fonctions de l'appareil et des différents types de fonctionnement de la partie mobile (MS) et du récepteur d'appels radio, commande également les fonctions et types de fonctionnement du répondeur téléphonique (AB) ainsi que l'échange d'informations techniques de commutation entre la partie mobile (MS) et le réseau de transmission d'informations pour des liaisons commutées, caractérisé en ce que des informations transmises par l'intermédiaire du système d'appels radio au récepteur d'appels radio sont envoyées à une mémoire intermédiaire (ZSP), qui est reliée au dispositif de commande (ST), que le dispositif de commande (ST) peut également assumer la fonction d'un système automatique de sélection et que le dispositif de commande (ST) commande l'établissement d'une liaison avec l'abonné appelant, sur la base de l'information de sélection mémorisée dans la mémoire intermédiaire (ZSP).

2. Appareil radio selon la revendication 1, caractérisé en ce que la partie mobile (MS) possède un commutateur (S) des types de fonctionnement, qui est relié au dispositif de commande (ST), et que le dispositif de commande (ST) est relié à un dispositif d'affichage (AE), ce qui permet un guidage de l'utilisateur lors du fonctionnement, selon un procédé de dialogue.

3. Appareil radio selon la revendication 1 ou 2, caractérisé en ce que, dans l'état de repos, le dispositif de commande (ST) assume la fonction d'un dispositif de recherche d'émetteurs et explore alternativement la totalité ou quelques-uns des canaux de transmission hertziens du téléphone sans fil et du système d'appels radio pour déterminer la présence éventuelle d'un souhait d'établissement d'une liaison.

4. Appareil radio selon la revendication 1, caractérisé en ce que le répondeur téléphonique (AB) contient, pour l'enregistrement d'informations, un convertisseur analogique/numérique (AD) et une mémoire (SP) reliée à ce convertisseur.
